(19) Europäisches Patentamt
European Patent Office
Office européen des brevets

(11) **EP 2 103 792 B1**

(12) **EUROPÄISCHE PATENTSCHRIFT**

(45) Veröffentlichungstag und Bekanntmachung des Hinweises auf die Patenterteilung:
**24.08.2011 Patentblatt 2011/34**

(51) Int Cl.:
*F02C 6/08* *(2006.01)*     *F02C 9/18* *(2006.01)*
*F04D 27/02* *(2006.01)*

(21) Anmeldenummer: **09003325.9**

(22) Anmeldetag: **06.03.2009**

(54) **Gasturbinenverdichter mit Zapfluftentnahmevorrichtung**

Gas turbine compressor with bleed air device

Compresseur d'une turbine à gaz doté d'une dispositif de prélèvement d'air

(84) Benannte Vertragsstaaten:
**DE FR GB**

(30) Priorität: **19.03.2008 DE 102008014957**

(43) Veröffentlichungstag der Anmeldung:
**23.09.2009 Patentblatt 2009/39**

(73) Patentinhaber: **Rolls-Royce Deutschland Ltd & Co KG**
**15827 Blankenfelde-Mahlow (DE)**

(72) Erfinder:
• **Clemen, Carsten**
**15749 Mittenwalde (DE)**
• **Schrapp, Henner**
**12103 Berlin (DE)**

(74) Vertreter: **Weber, Joachim**
**Hoefer & Partner**
**Patentanwälte**
**Pilgersheimer Strasse 20**
**81543 München (DE)**

(56) Entgegenhaltungen:
**EP-A- 0 638 725     EP-A- 1 329 615**
**EP-A- 1 801 403     US-A- 4 008 977**

EP 2 103 792 B1

**Beschreibung**

Die Erfindung bezieht sich auf einen Gasturbinenverdichter gemäß den Merkmalen des Oberbegriffs des Anspruches 1.

Im Einzelnen bezieht sich die Erfindung auf einen Gasturbinensverdichter, aus welchem in einem Gehäusebereich Zapfluft (bleed air) entnommen wird.

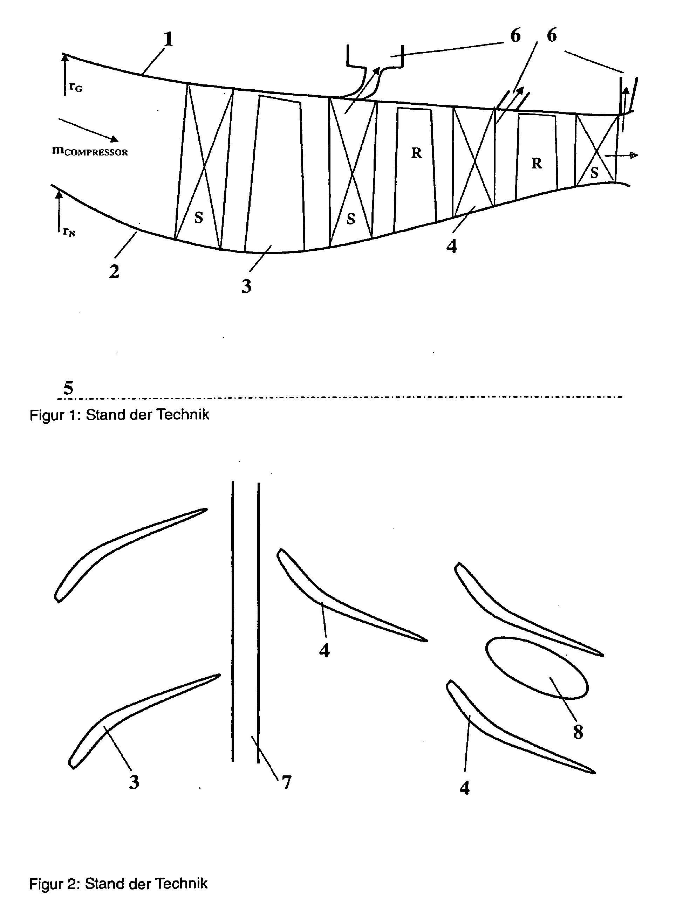

In Turbomaschinen wird aus Verdichtern (Turboverdichter) zum Zwecke der Versorgung von Subsystemen oder externen Abnehmern, wie zum Beispiel der Flugzeugkabine, zum Zwecke der Stabilisierung des Verdichters bei transienten Manövern, zum Zwecke der Turbinenkühlung oder zum Zwecke der Strömungsrezirkulation innerhalb des Verdichters Zapfluft an verschiedenen Positionen am Verdichtergehäuse entnommen (Fig. 1). Diese Entnahme kann entweder zwischen zwei Schaufelreihen erfolgen oder innerhalb einer Schaufelreihe (Fig. 2) oder einer Kombination aus beiden. Die Entnahmegeometrie kann dabei prinzipiell jede denkbare Form aufweisen.

Die Luftentnahmegeometrie ist entweder ein Umfangsschlitz 7 oder ein diskretes Loch 8 oder eine Kombination aus beidem am Verdichtergehäuse. Die Geometrie der Luftentnahme ist sehr einfach gestaltet und daher nicht optimal auf die Strömungsverhältnisse abgestimmt, die an der Entnahmestelle nahe dem Verdichtergehäuse vorherrschen. Dies führt dazu, dass die Strömung nicht optimal in die Zapfluftentnahmegeometrie einfließen kann. Das führt zum Beispiel zu Strömungsablösung beim Eintritt der Strömung in die Entnahmegeometrie und zu hohem Druckverlust innerhalb der Entnahmegeometrie. Ein weiteres Problem ist eine unerwünschte Wechselwirkung zwischen der Strömung im Verdichter und der Strömung in der Entnahmegeometrie. Das führt zum Beispiel zu Strömungsrückfluss aus der Entnahmegeometrie in die Hauptströmung. Das führt zu Verlust von Verdichterwirkungsgrad, zu Verlust von Verdichterstabilität und gegebenenfalls zu einer mechanischen Anregung der Verdichterbeschaufelung bis hin zum Schaufelversagen.

Die EP-A-1 801 403 beschreibt einen Gasturbinenverdichter, bei welchem in dem Gehäuse Ausnehmungen einer Zapfluftentnahmevorrichtung ausgebildet sind. Die Zapfluft strömt über abgerundete Kanten mit starkem Radius in einen sich direkt an die Ausnehmung anschließenden, radial zur Maschinenachse angeordneten Kanal.

Die EP-A-0 638 725 zeigt eine ähnliche Anordnung, bei welcher die Zapfluft an einer Gehäusestufe mit einem gegen die Strömungsrichtung gerichteten Kanal entnommen wird, wobei sich stromab des Kanals der Gehäuseradius erweitert.

Die EP-A-1 329 615 zeigt eine Ausgestaltung mit Zapfluft-Entnahmeausnehmungen, die am Rotor ausgebildet sind.

Der Erfindung liegt die Aufgabe zugrunde, einen Gasturbinenverdichter der eingangs genannten Art zu schaffen, welcher bei einfachem Aufbau und einfacher Herstellbarkeit einen hohen Wirkungsgrad aufweist.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß löst eine, auf die im Verdichter an der Entnahmestelle vorherrschenden Strömungsbedingungen angepasste, Zapfluftentnahmegeometrie die oben beschriebenen Probleme. Im speziellen betrifft die erfindungsgemäße Lösung somit eine angepasste Zapfluftentnahmegeometrie für die Luftentnahme zwischen zwei Schaufelreihen (Rotor 3 / Stator 4 bzw. Stator 4 / Rotor 3 aber auch Stator 4 / Stator 4 oder Rotor 3 / Rotor 3) und vor oder hinter einer Schaufelreihe (Rotor 3 oder Stator 4). Dabei kann es sich erfindungsgemäß um Axial- oder Radialverdichter in einer Turbo- bzw. Strömungsmaschine handeln.

Die erfindungsgemäße Zapfluftentnahmegeometrie zeichnet sich durch minimalen Druckverlust und maximale Effizienz aus.

Die vorliegende Erfindung beschreibt eine optimierte Entnahmegeometrie, die sich mit Hilfe von wenigen geometrischen und maschinenspezifischen Parametern beschreiben lässt.

Die Idee, die der Erfindung zugrunde liegt, ist, die Entnahmegeometrie so zu gestalten, dass die Strömung ohne Störung in die Entnahmegeometrie einfließen kann, was zu einer Minimierung des lokalen Totaldruckverlustes führt und innerhalb der Entnahmegeometrie so umgelenkt wird, dass der Drall der Strömung auf Null reduziert wird und dadurch ein Maximum an statischer Druckrückgewinnung erzielt wird.

Dies kann dadurch erreicht werden, dass die Entnahmegeometrie zum einen in einem definierten Winkel in Umfangsrichtung zum Verdichtergehäuse geneigt ist und zum anderen eine auf die Richtung der in die Entnahmegeometrie einfließende Strömung angepasste Profilierung in Axialrichtung erhält. Diese Strömungsrichtung wird für den Fall, dass sich vor, d.h. stromauf der Entnahmestelle eine Statorschaufel befindet, aus deren Schaufel-Abströmwinkel bestimmt, für den Fall dass sich stromauf eine Rotorschaufel befindet, aus deren Schaufel-Abströmwinkel und der Drehzahl bestimmt. Für den Fall, dass sich keine Schaufel stromauf der Entnahmegeometrie befindet, ist die maßgebliche Größe die Strömungsrichtung parallel zur Maschinenachse, d.h. 0 Grad.

Im Folgenden wird die Erfindung im Detail beschrieben:

1.) Die Zapfluftentnahmestelle befindet sich am Verdichtergehäuse zwischen zwei Schaufelreihen oder vor oder hinter einer Schaufelreihe. Die Zapfluftentnahmestelle kann dabei eine beliebige Erstreckung in Axial- sowie in Umfangsrichtung haben.

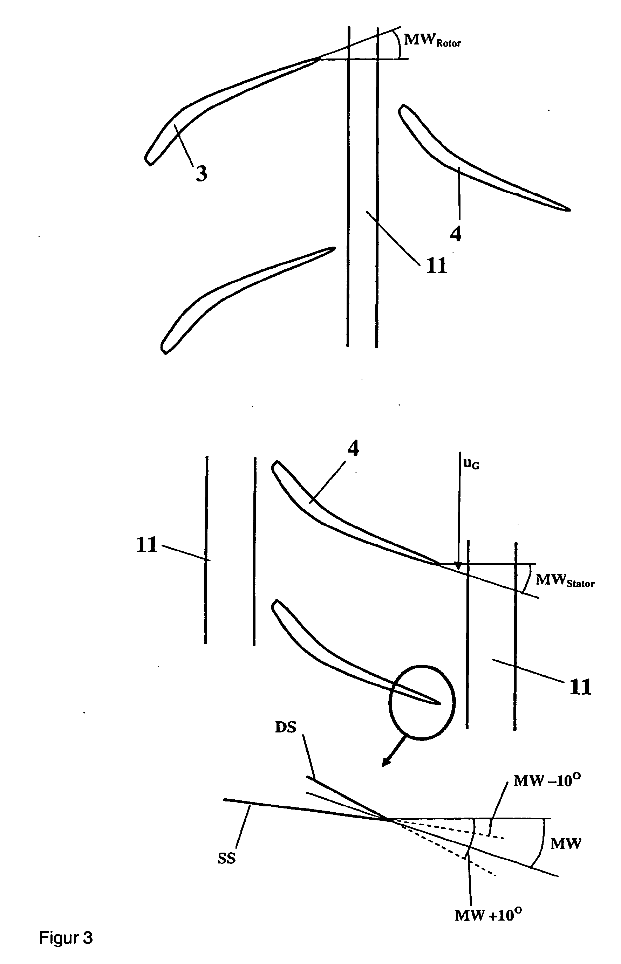

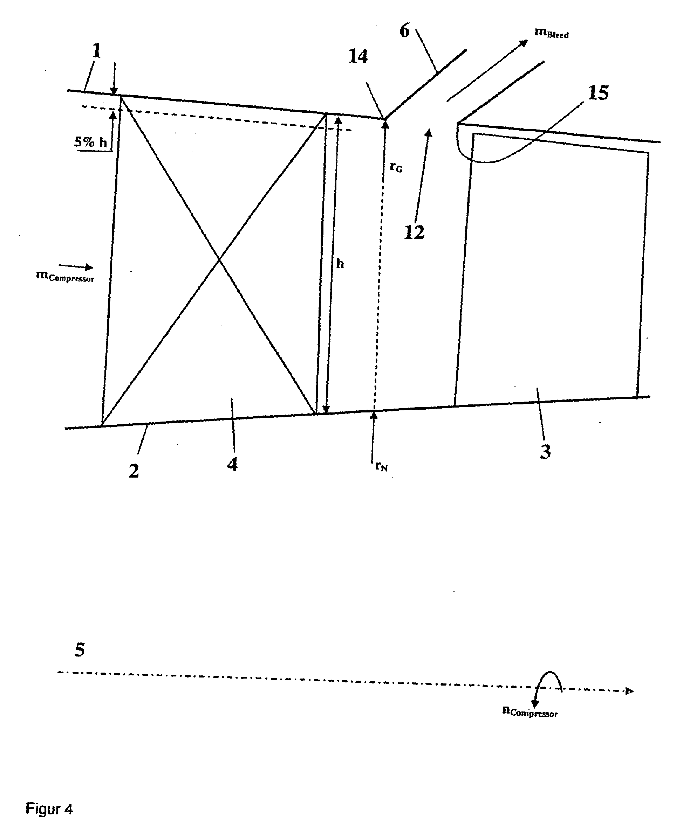

2.) Wenn eine Schaufelreihe stromauf der Zapfluftentnahmestelle existiert (Rotor oder Stator) zeichnet sie sich dadurch aus, dass sie einen Profilaustrittswinkel (Metallwinkel) nahe der Verdichtergehäusewand aufweist (Fig. 3). Der Profilaustrittswinkel ist eine messbare Größe, die sich aus dem Mittelwert des saugseitigen (SS) und druckseitigen (DS) Profilwinkels ergibt (Fig. 3). Nahe der Gehäusewand bedeutet in einem Abstand kleiner 5% der Schaufelhöhe h (Fig. 4).

3.) Dieser Metallaustrittswinkel MW ist ein Parameter für die Definition der Zapfluftentnahmegeometrie.

4.) Ein weiterer Parameter ist die Umfangsgeschwindigkeit am Verdichtergehäuse $u_G$, die sich aus der Drehzahl des Verdichters $N_{COMPRESSOR}$ [1/s] und dem Gehäuseradius $r_G$ an der Vorderkante der Zapfluftentnahmegeometrie berechnet zu

$$u_G = r_G \; 2\pi \; n_{COMPRESSOR}$$

und das Nabenverhältnis

$$\nu = r_N \; / \; r_G$$

an der Vorderkante der Zapfluftentnahmegeometrie (Fig. 3 und 4). Dabei ist $n_{COMPRESSOR}$ eine beliebige reelle Zahl.

5.) Ein weiterer Parameter ist die zu entnehmende Luftmenge $\xi$ definiert als Entnahmeluftmenge $m_{BLEED}$ bezogen auf die Luftmenge die in den Verdichter eintritt $m_{COMPRESSOR}$:

$$\xi = m_{BLEED} / \; m_{COMPRESSOR} \cdot$$

6.) Außerdem sind die Schaufelzahlen der Schaufelreihe vor bzw. hinter der Entnahmegeometrie zu berücksichtigen.

7.) Mit diesen bekannten Parametern lässt sich die Entnahmegeometrie definieren.

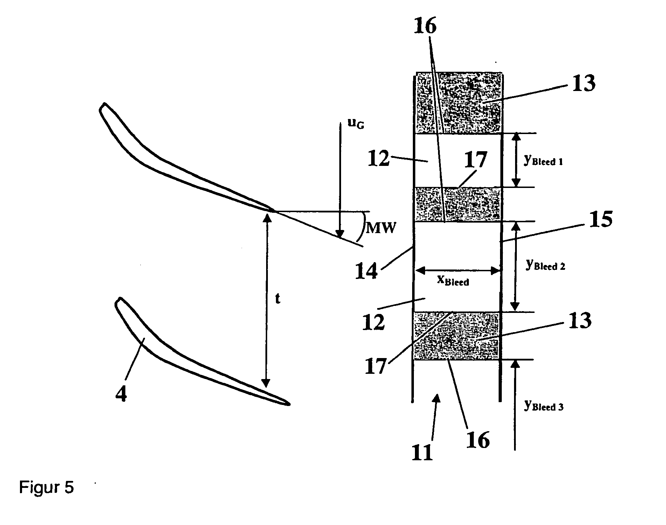

8.) Die Entnahmegeometrie setzt sich aus mehreren diskreten Entnahmekanälen zusammen die sich durch eine definierte Erstreckung und Form in Umfangsrichtung und in axiale Richtung auszeichnen und eine Fläche wie dargestellt in Fig. 5 aufweisen.

9.) Die Anzahl der Entnahmekanäle $N_{BLEED}$ kann beliebig sein, idealerweise jedoch ein ganzzahliges Vielfaches oder ein ganzzahliger Teiler der Schaufelzahl der Schaufelreihe vor bzw. hinter der Entnahmestelle.

10.) Die Umfangserstreckung $y_{BLEED}$ eines Entnahmekanals (Fig. 5) kann ebenfalls beliebig sein, sollte jedoch ein ganzzahliger Teiler oder Vielfaches der Gehäuseteilung t der Schaufelreihe stromab oder stromauf sein.

11.) Die axiale Erstreckung $x_{BLEED}$ (Fig. 5) kann ebenfalls beliebig sein, kann jedoch maximal den vorhandenen axialen Raum zwischen zwei Schaufelreihen einnehmen.

12.) Die Erstreckung in Umfangs - und Axialrichtung muss jedoch in Kombination mit der Anzahl der Entnahmekanäle die Bedingung erfüllen, dass die Gesamtfläche $A_{BLEED}$ so groß ist, dass die gewünschte Zapfluftmenge $m_{BLEED}$ bezogen auf die Verdichtereintrittsluftmenge $m_{COMPRESSOR}$ abgenommen werden kann. Die Größen $A_{BLEED}$ und $\xi = m_{BLEED} / m_{COMPRESSOR}$ sind Eingangsparameter für die Entnahmegeometriedimensionierung. Das heißt:

$$\text{x}_{\text{BLEED}}\ \text{y}_{\text{BLEED}}\ \text{N}_{\text{BLEED}}\ =\ \text{A}_{\text{BLEED}}$$

muss erfüllt sein.

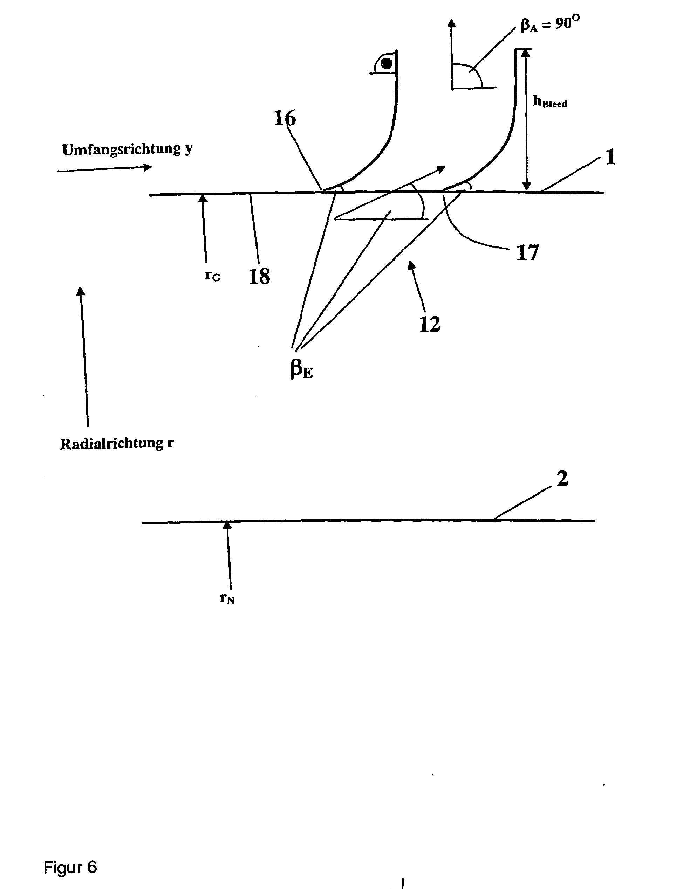

13.) Die Definition der Form der Entnahmegeometrie in Umfangsrichtung in der y-r-Ebene wird wie folgt definiert: Die Form in Umfangsrichtung hängt vom Eintrittswinkel der Strömung in die Entnahmegeometrie $\beta_E$ und vom Austrittswinkel aus der Entnahmegeometrie $\beta_A$ ab (Fig. 6). Der Austrittswinkel relativ zur Maschinenachse ist radial bzw. 90 Grad zum Verdichtergehäuse (drallfrei). Der Eintrittswinkel lässt sich mit Hilfe folgender Größen bestimmen:

$$\xi,\ \ r_G,\ \ \nu,\ \ A_{\text{BLEED}},\ \ \text{BOA}.$$

Lediglich die Größe BOA muss noch genauer definiert werden, die anderen Größen wurden bereits oben definiert. Die Größe BOA lässt sich wie folgt definieren:

a) Wenn eine Statorschaufel stromauf der Entnahmegeometrie existiert, entspricht BOA dem Metallaustrittswinkel der Statorschaufel $MW_{STATOR}$ nahe dem Gehäuse $\pm$ 10 Grad (Fig. 3). Nahe dem Gehäuse bedeutet in einem Bereich zwischen 95 und 100% der Schaufelhöhe. Somit kann BOA bei z.B. einem Wert des Metallaustrittswinkels nahe dem Gehäuse von 20-25 Grad Werte zwischen 10 und 35 Grad annehmen.

b) Wenn eine Rotorschaufel stromauf der Entnahmegeometrie existiert, ergibt sich BOA aus dem Metallaustrittswinkel der Rotorschaufel $MW_{ROTOR}$ nahe dem Gehäuse $\pm$ 10 Grad gemäß folgender Gleichung

$$\text{BOA} = \arctan\ (2\text{-tan}\ MW_{\text{ROTOR}}).$$

Nahe dem Gehäuse bedeutet in einem Bereich zwischen 95 und 100% der Schaufelhöhe. Somit kann BOA bei z.B. einem Wert des Metallaustrittswinkels nahe dem Gehäuse von 20-25 Grad Werte zwischen 46.9 und 68.6 Grad annehmen.

c) Wenn keine Schaufelreihe stromab der Entnahmestelle existiert, ist BOA = 0 Grad.

Der Eintrittswinkel der Strömung in die Entnahmegeometrie $\beta_E$ berechnet sich dann mit den bekannten Größen zu:

$$\beta_E = \arctan\!\left(\frac{\xi \pi r_G^2 \left(1 - \nu^2\right)}{A_{BLEED}\ \tan BOA}\right)$$

Damit sind der Eintrittswinkel $\beta_E$ und der Austrittswinkel $\beta_A$ definiert (Fig. 6). Die Verbindung zwischen diesen beiden Winkeln wird durch eine stetige wendepunktfreie Linie realisiert die an ihrem Anfangspunkt die Tangentensteigung $\beta_E$ und an ihrem Endpunkt die Tangentensteigung $\beta_A$ aufweist.

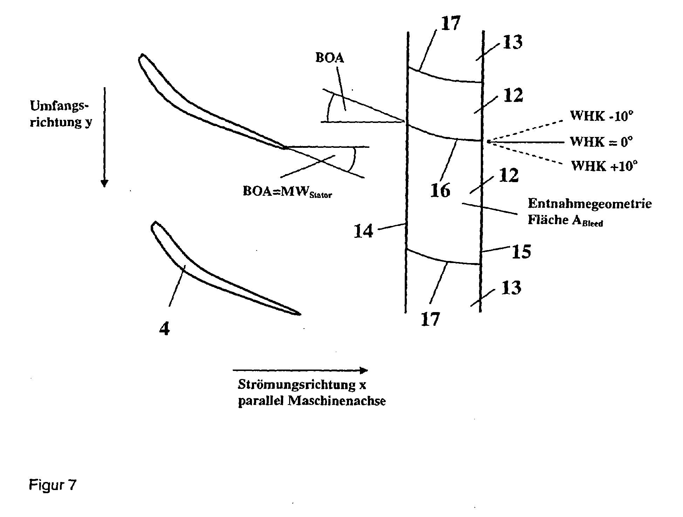

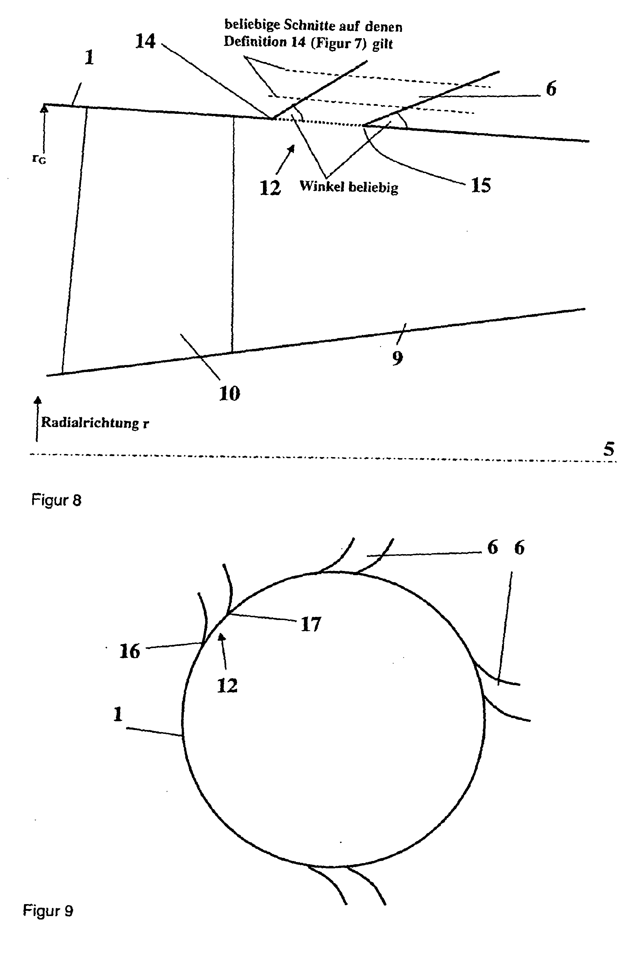

14.) Die axiale Form in der x-y- Ebene (Fig. 7), wird definiert durch den bereits definierten Winkel BOA an der Vorderkante der Entnahmegeometrie $\pm$ 10 Grad und einem Winkel an der Hinterkante WHK der Entnahmegeometrie, der beliebige Werte zwischen +10 Grad und -10 Grad annehmen kann, idealerweise jedoch 0 Grad beträgt. Die Verbindung zwischen diesen beiden Winkeln wird durch eine stetige wendepunktfreie Linie realisiert, die an ihrem Anfangspunkt die Tangentensteigung BOA und an ihrem Endpunkt die Tangentensteigung WHK aufweist. Diese Definition gilt für jeden achsparallelen Schnitt durch die Entnahmegeometrie in der x-y-Ebene auf beliebiger radialer Position in der Entnahmegeometrie (Fig. 8).

15.) Die Neigung der Zapfluftentnahmegeometrie gegenüber der Maschinenachse x ist beliebig (Fig. 8).

16.) Die Entnahmekanäle können beliebig über den Umfang (y) verteilt zueinander angeordnet werden, wie in Fig. 9 gezeigt.

Im Folgenden wird die Erfindung anhand von Ausführungsbeispielen in Verbindung mit der Zeichnung beschrieben. Dabei zeigt:

Fig. 1     eine schematische Axialschnittansicht eines Verdichters mit Zapfluftentnahme gemäß dem Stand der Technik,

Fig. 2     eine schematische Darstellung des Standes der Technik mit Zapfluftentnahmepositionen in Blickrichtung radial nach außen auf die Gehäuseinnenwandung,

Fig. 3     schematische Darstellungen, in analoger Ansicht der Fig. 2 zur Definition verschiedener Winkel,

Fig. 4     eine Axialschnittansicht, ebenfalls schematisch, analog Fig. 1,

Fig. 5     eine Darstellung der erfindungsgemäßen Ausgestaltung in Blickrichtung analog Fig. 2,

Fig. 6     eine stirnseitige Ansicht (auf eine Radialebene, eines erfindungsgemäßen Ausgestaltungsbeispiels),

Fig. 7     eine Darstellung, analog Fig. 5, weiterer Ausgestaltungsbeispiele,

Fig. 8     eine Axialschnittansicht in erfindungsgemäßer Ausgestaltung, und

Fig. 9     eine Radialebenen-Schnittansicht in vereinfachter Darstellung.

Die Fig. 1 zeigt in schematischer Darstellung in Axialschnittansicht ein Gehäuse 1 sowie eine drehbar gelagerte Nabe 2, an welcher Rotorschaufeln 3 angeordnet sind. Das Gehäuse trägt in bekannter Weise Statorschaufeln 4. Die Maschinenachse ist mit dem Bezugszeichen 5 versehen. Weiterhin zeigt die Fig. 1 in schematischer Darstellung Zapfluft-Entnahmevorrichtungen 6 oder Zapfluft-Entnahmegeometrien. Diese sind in Fig. 2 in Prinzipdarstellung nochmals gezeigt, nämlich als Umfangsschlitz 7 oder als diskretes Loch oder Ausnehmungen 8.

Die Fig. 3 zeigt erste Darstellungen zur Erläuterung der Erfindung. Der obere Teil der Fig. 3 zeigt die Definition des Rotor-Metallwinkels $MW_{ROTOR}$, welcher zu einer parallel zur Maschinenachse 5 angeordneten Geraden definiert ist. Der untere Teil der Fig. 3 zeigt (auch in Vergrößerung) eine Statorschaufel mit Druckseite DS und Saugseite SS und die Definition der Winkel sowie Winkelbereiche.

Die Fig. 4 zeigt in Axialansicht in schematischer Weise eine Axialrichtungs-Vorderkante 14 und eine Axialrichtungs-Hinterkante 15 einer Zapfluftentnahmevorrichtung / Zapfluftentnahmegeometrie 6. Weiterhin sind weitere Bemessungsangaben, insbesondere zu $r_G$ und $r_N$ gezeigt.

Die Fig. 5 zeigt eine Gehäuseaussicht mit Blickrichtung in radialer Richtung nach außen, aus welcher sich die in einem streifenförmigen Umfangsbereich 11 angeordneten Ausnehmungen 12 ersehen lassen. Diese weisen die bereits erwähnten Umfangsrichtungs-Vorderkanten 16 und Umfangsrichtungs-Hinterkanten 17 auf sowie Axialrichtungs-Vorderkanten 14 und Axialrichtungs-Hinterkanten 15. Weiterhin ergibt sich die Bemessung in X-Richtung und Y-Richtung, aus der sich die Flächen der Ausnehmungen 12 berechnen.

Die Fig. 6 zeigt eine stirnseitige Ansicht, in welcher die bogenförmigen Konturen der Nabe 2 sowie einer Gehäuseoberfläche 18 des Gehäuses 1 stark vergrößert wiedergegeben sind. Hieraus ergibt sich insbesondere die Definition des Eintrittswinkels $\beta_E$ sowie des Austrittswinkels $\beta_A$.

Die Fig. 7 zeigt eine analoge Darstellung der Fig. 5 mit weiteren Winkeldefinitionen.

Die Fig. 8 zeigt eine Axial-Seitenansicht, aus welcher insbesondere ersichtlich ist, dass in Axialrichtung die Winkel an der Axialrichtungs-Vorderkante 14 und der Axialrichtungs-Hinterkante 15 beliebig sein können.

Die Fig. 9 zeigt mögliche Verteilungen der Anordnungen der Zapfluftentnahme-Vorrichtungen 6, diese können gleichmäßig oder ungleichmäßig am Umfang angeordnet sein.

Die erfindungsgemäße Lösung führt in vorteilhafter Weise dazu, die Druckverluste in Zapfluftentnahmegeometrien zu minimieren und die negative Wechselwirkung mit der Verdichterhauptströmung zu verhindern. Das führt dazu, dass die Zapfluftentnahme effizienter ist als bei nicht optimierter Geometrie. Damit kann z.B. die Turbinenkühlung, die Verdichterstabilisierung sowie die Kabinenbedruckung effizienter realisiert werden. Dies führt zu verbesserter Verdichterströmung, verbesserter Zapfluftströmung und damit zu verbessertem Verdichterwirkungsgrad, Stabilität und schließlich geringerem Treibstoffverbrauch des Triebwerks. Da die verbesserte Geometrie einfach zu fertigen ist und keinen zusätzlichen Aufwand an Fertigungstechnologie bedeutet, ist sie kostenneutral. Außerdem bedeutet sie kein zusätzliches Gewicht für das Verdichtermodul, da sie vorhandene Geometrien ersetzt.

Bezugszeichenliste

1 Gehäuse / Verdichtergehäuse
2 Nabe / Rotornabe
3 Rotor / Rotorschaufel / Rotorschaufelreihe (R)
4 Stator / Statorschaufel / Statorschaufelreihe (S)
5 Maschinenachse
6 Zapfluftentnahmevorrichtung / Zapfluftentnahmegeometrie
7 Umfangsschlitz
8 diskretes Loch / Ausnehmung
9 Verdichterkanal
10 Schaufel
11 Umfangsbereich
12 Ausnehmung
13 Wandbereich
14 Axialrichtungs-Vorderkante
15 Axialrichtungs-Hinterkante
16 Umfangsrichtungs-Vorderkante
17 Umfangsrichtungs-Hinterkante
18 Gehäuseoberfläche

**Patentansprüche**

1. Gasturbinenverdichter mit einem Gehäuse (1), in welchem eine Rotornabe (2) drehbar gelagert ist, sowie mit einem zwischen dem Gehäuse (1) und der Rotornabe (2) gebildeten Verdichterkanal (9), in welchem zumindest ein um eine Maschinenachse (5) drehbarer Rotor (4) und ein Stator (5) angeordnet sind, wobei in dem Gehäuse (1) Ausnehmungen (12) einer Zapfluftentnahmevorrichtung (6) ausgebildet sind, welche in zumindest einem Umfangsbereich (11) in Umfangsrichtung zueinander angeordnet sind, **dadurch gekennzeichnet, dass** die Ausnehmung (12) in Umfangrichtung eine Umfangsrichtungs-Vorderkante (16) und eine Umfangsrichtungs-Hinterkante (17) aufweist, welche jeweils in eine Wandung der Ausnehmung (12) übergehen und dass die jeweils an die Umfangs-Vorderkante (16) und die Umfangs-Hinterkante (17) anschließende Wandung der Ausnehmung (12) mit der Oberfläche (18) des Gehäuses (1) jeweils einen gleichen Winkel ($\beta_E$) einschließen, welcher sich nach folgender Formel berechnet:

$$\beta_E = \arctan\left(\frac{\xi \pi r_G^2 \left(1 - v^2\right)}{A_{BLEED} \tan BOA}\right),$$

wobei

($\xi$) eine zu entnehmende dimensionslose Luftmenge ist, die sich aus der Entnahmeluftmenge $m_{BLEED}$ und der Kompressorluftmenge $m_{COMPRESSOR}$ wie folgt berechnet: $\xi = m_{BLEED}/m_{COMPRESSOR}$,
($r_G$) ein Gehäuseradius an der Umfangsrichtungs-Vorderkante (16) ist,
($v$) ein Nabenverhältnis an der Umfangsrichtungsvorderkante ist mit $v = r_N / r_G$ mit dem Nabenradius ($r_N$),
($A_{BLEED}$) die Gesamtfläche aller Ausnehmungen (12) des Umfangsbereichs (11) ist, und
(BOA) ein gleicher Winkel der Umfangsrichtungs-Vorderkante (16) und der Umfangsrichtungs-Hinterkante (17), welche jeweils in eine Wandung der Ausnehmung (12) übergehen und bezogen auf eine zu der Maschinenachse (5) parallele Gerade ist, wobei der Winkel (BOA) einer der folgenden Regeln genügt:

a) wenn stromauf der Ausnehmung (12) eine Statorschaufel (4) vorhanden ist, liegt der Winkel (BOA) in einem Bereich von $\pm$ 10 Grad des Metallaustrittswinkels ($MW_{STATOR}$) der Statorschaufel (4) in einem Bereich von 95% bis 100% der Schaufelhöhe des Stators (4),

b) wenn stromauf der Ausnehmung (12) eine Rotorschaufel (3) vorhanden ist, ergibt sich der Winkel (BOA) aus dem Metallaustrittswinkels ($MW_{ROTOR}$) der Rotorschaufel (3) $\pm$ 10 Grad in einem Bereich von 95% bis 100% der Schaufelhöhe des Rotors (3), mit der Gleichung:

$$BOA = \arctan(2\text{-}\tan MW_{ROTOR})$$

c) wenn stromauf der Ausnehmung (12) keine Schaufelreihe vorhanden ist, ist der Winkel (BOA=0).

2. Gasturbinenverdichter nach Anspruch 1, **dadurch gekennzeichnet, dass** sich die Gesamtfläche ($A_{BLEED}$) aus

$$X_{BLEED}\, Y_{BLEED}\, N_{BLEED} = A_{BLEED}$$

berechnet, mit

$N_{BLEED}$ = Anzahl der Ausnehmungen (12),
$X_{BLEED}$ = Abmessung der Ausnehmungen (12) in Axialrichtung, und
$Y_{BLEED}$ = Abmessung der Ausnehmungen (12) in Umfangs-richtung.

3. Gasturbinenverdichter nach Anspruch 1 oder 2, **dadurch gekennzeichnet, dass** ein Winkel WHK des stromabseitigen Endbereichs der Umfangsrichtungs-Vorderkante (16) und der Umfangsrichtungshinterkante (17), welche jeweils in eine Wandung der Ausnehmung (12) übergehen und bezogen auf eine zu der Maschinenachse (5) parallele Gerade in einem Bereich von $\pm$ 10 Grad zu dieser Gerade bestimmt ist.

4. Gasturbinenverdichter nach Anspruch 3, **dadurch gekennzeichnet, dass** der Winkel WHK = 0 Grad ist.

5. Gasturbinenverdichter nach einem der Ansprüche 1 bis 4, **dadurch gekennzeichnet, dass** die Umfangsrichtungs-Vorderkante (16) und die Umfangsrichtungs-Hinterkante (17) jeweils in Form einer stetigen, wendepunktfreien Linie ausgebildet sind.

**Claims**

1. Gas-turbine compressor with a casing (1) in which a rotor hub (2) is rotatably borne, and with a compressor duct (9) being disposed between the casing (1) and the rotor hub (2), in which at least one rotor (4), which is rotatable about a machine axis (5), and one stator (5) are arranged, with recesses (12) of a bleed-air tapping device (6) being provided in the casing (1), which - in at least one circumferential area (11) - are arranged circumferentially to each other, **characterized in that** the recess (12) features a circumferential leading edge (16) in the circumferential direction and a circumferential trailing edge (17), each of which extending into a wall of the recess (12), and that the walls of the recess (12) respectively adjoining the circumferential leading edge (16) and the circumferential trailing edge (17) include an identical angle ($\beta_E$) with the surface (18) of the casing (1), this angle being calculated as per the following formula:

$$\beta_E = \arctan\left(\frac{\xi \pi r_G^2 (1 - v^2)}{A_{BLEED}\, \tan BOA}\right),$$

where

($\xi$) is a dimensionless air quantity to be tapped, calculated from the bleed air quantity $m_{BLEED}$ and the compressor air quantity $m_{COMPRESSOR}$ as follows: $\xi = M_{BLEED} / m_{COMPRESSOR}$

$(r_G)$ is a casing radius at the circumferential leading edge (16),

$(v)$ is a hub ratio at the circumferential leading edge where $v = r_N / r_G$ with the hub radius $(r_N)$,

$(A_{BLEED})$ is the total surface of all recesses (12) of the circumferential area (11), and

$(BOA)$ is an identical angle of the circumferential leading edge (16) and the circumferential trailing edge (17), each of which extending into a wall of the recess (12), relative to a straight line located parallelly to the machine axis (5), with the angle (BOA) satisfying one of the following rules:

a) if a stator vane (4) exists upstream of the recess (12), the angle (BOA) ranges within $\pm$ 10 degrees of the metal exit angle $(MW_{STATOR})$ of the stator vane (4) in a range of 95 percent to 100 percent of the blade height of the stator (4),

b) if a rotor blade (3) exists upstream of the recess (12), the angle (BOA) is calculated from the metal exit angle $(MW_{ROTOR})$ of the rotor blade (3) $\pm$ 10 degrees in a range of 95 percent to 100 percent of the blade height of the rotor (3) as per the following equation:

$$BOA = \arctan(2\text{-tan } MW_{ROTOR})$$

c) if no blade row exists upstream of the recess (12), the angle BOA is 0 degrees (BOA = 0).

2. Gas-turbine compressor in accordance with Claim 1, **characterized in that** the total area $(A_{BLEED})$ is calculated as per the equation:

$$x_{BLEED} \; y_{BLEED} \; N_{BLEED} = A_{BLEED} \, ,$$

with

$N_{BLEED}$ being the number of the recesses (12),

$X_{BLEED}$ being the dimension of the recesses (12) in the axial direction, and

$Y_{BLEED}$ being the dimension of the recesses (12) in the circumferential direction.

3. Gas-turbine compressor in accordance with Claim 1 or 2, **characterized in that** an angle WHK of the downstream end area of the circumferential leading edge (16) and of the circumferential trailing edge (17), each of which extending into a wall of the recess (12), relative to a straight line located parallelly to the machine axis (5), is defined in a range of $\pm$ 10 degrees to this straight line.

4. Gas-turbine compressor in accordance with Claim 3, **characterized in that** the angle WHK is 0 degrees.

5. Gas-turbine compressor in accordance with one of the Claims 1 to 4, **characterized in that** the circumferential leading edge (16) and the circumferential trailing edge (17) are each provided as a continuous, non-inflecting line.

**Revendications**

1. Compresseur de turbine à gaz avec un carter (1) dans lequel est logé de manière pivotante un moyeu de rotor (2), ainsi qu'avec un canal de compresseur (9) formé entre le carter (1) et le moyeu de rotor (2), dans lequel sont disposés au moins un rotor (4) pivotant autour d'un axe de machine (5) et un stator (5), sachant que dans le carter (1) sont formés des évidements (12) d'un dispositif de prélèvement d'air de purge (6) qui sont disposés les uns par rapport aux autres dans le sens circonférentiel dans au moins une zone circonférentielle (11), **caractérisé en ce que** l'évidement (12) présente dans le sens circonférentiel un bord d'attaque circonférentiel (16) et un bord de fuite circonférentiel (17), qui se prolongent respectivement dans une paroi de l'évidement (12), et que les parois de l'évidement (12) qui se raccordent respectivement au bord d'attaque circonférentiel (16) et au bord de fuite circonférentiel (17) incluent respectivement avec la surface (18) du carter (1) un angle identique $(\beta_E)$ qui se calcule selon la formule suivante :

$$\beta_E = \arctan\left(\frac{\xi \pi r_G^2 \left(1 - v^2\right)}{A_{BLEED} \tan BOA}\right),$$

où

($\xi$) est une quantité adimensionnelle d'air à prélever qui se calcule à partir du volume d'air prélevé $m_{BLEED}$ et du volume d'air de compresseur $m_{COMPRESSOR}$ comme suit : $\xi = m_{BLEED} / m_{COMPRESSOR}$,

($r_G$) est un rayon de carter sur le bord d'attaque circonférentiel (16),

($v$) est un rapport de moyeu sur le bord d'attaque circonférentiel, où $v = r_N / r_G$ avec le rayon de moyeu ($r_N$),

($A_{BLEED}$) est la surface totale de tous les évidements (12) de la zone circonférentielle (11), et

(BOA) est un angle identique du bord d'attaque circonférentiel (16) et du bord de fuite circonférentiel (17) qui se prolongent respectivement dans une paroi de l'évidement (12), par rapport à une droite parallèle à l'axe de machine (5), sachant que l'angle (BOA) satisfait à l'une des règles suivantes :

a) si une aube de stator (4) se trouve en amont de l'évidement (12), l'angle (BOA) se situe dans une plage de $\pm$ 10 degrés de l'angle métal de sortie ($MW_{STATOR}$) de l'aube de stator (4) dans une plage de 95 % à 100 % de la hauteur d'aube du stator (4).

b) si une aube de rotor (3) se trouve en amont de l'évidement (12), l'angle (BOA) s'obtient à partir de l'angle métal de sortie ($MW_{ROTOR}$) de l'aube de rotor (3) $\pm$ 10 degrés dans une plage de 95 % à 100 % de la hauteur d'aube du rotor (3), avec l'équation :

$$BOA = \arctan\left(2 - \tan MW_{ROTOR}\right)$$

c) s'il n'y a pas de rangée d'aubes en amont de l'évidement (12), l'angle BOA est de 0 degrés (BOA=0).

2. Compresseur de turbine à gaz selon la revendication n° 1, **caractérisé en ce que** la surface totale ($A_{BLEED}$) se calcule à partir de :

$$x_{BLEED} \; y_{BLEED} \; N_{BLEED} = A_{BLEED},$$

où

$N_{BLEED}$ = nombre d'évidements (12),

$X_{BLEED}$ = dimension des évidements (12) dans le sens axial, et

$Y_{BLEED}$ = dimension des évidements (12) dans le sens circonférentiel.

3. Compresseur de turbine à gaz selon la revendication n° 1 ou n° 2, **caractérisé en ce qu'**un angle WHK de l'extrémité aval du bord d'attaque circonférentiel (16) et du bord de fuite circonférentiel (17) qui se prolongent respectivement dans une paroi de l'évidement (12), par rapport à une droite parallèle à l'axe de machine (5), est défini dans une plage de $\pm$ 10 degrés par rapport à cette droite.

4. Compresseur de turbine à gaz selon la revendication n° 3, **caractérisé en ce que** l'angle WHK est de 0 degrés.

5. Compresseur de turbine à gaz selon une des revendications n° 1 à n° 4, **caractérisé en ce que** le bord d'attaque circonférentiel (16) et le bord de fuite circonférentiel (17) sont respectivement formés par une ligne continue, sans point d'inflexion.

Figur 1: Stand der Technik

Figur 2: Stand der Technik

Figur 3

Figur 4

Figur 5

$\beta_A = 90^O$

$h_{Bleed}$

**16**

Umfangsrichtung y

**1**

$r_G$ **18**

**17**

**12**

Radialrichtung r

$\beta_E$

**2**

$r_N$

Figur 6

Figur 7

beliebige Schnitte auf denen
Definition 14 (Figur 7) gilt

**14**

**1**

**6**

$r_G$

**12**    Winkel beliebig

**15**

**10**

**9**

Radialrichtung r

**5**

Figur 8

**6  6**

**17**

**16**

**12**

**1**

Figur 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1801403 A
- EP 0638725 A
- EP 1329615 A